(19) Europäisches Patentamt
European Patent Office
Office européen des brevets

(11) **EP 4 585 635 A1**

(12) **EUROPEAN PATENT APPLICATION**
published in accordance with Art. 153(4) EPC

(43) Date of publication:
**16.07.2025 Bulletin 2025/29**

(21) Application number: **23862847.3**

(22) Date of filing: **04.08.2023**

(51) International Patent Classification (IPC):
***C08G 65/40*** *(2006.01)*

(52) Cooperative Patent Classification (CPC):
**C08G 65/40**

(86) International application number:
**PCT/JP2023/028547**

(87) International publication number:
**WO 2024/053304 (14.03.2024 Gazette 2024/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **06.09.2022 JP 2022141134**

(71) Applicants:
- **Honshu Chemical Industry Co., Ltd.**
  **Tokyo 103-0027 (JP)**
- **DAIKIN INDUSTRIES, LTD.**
  **Osaka-shi, Osaka 530-0001 (JP)**

(72) Inventors:
- **SHIMODA, Tomoaki**
  **Wakayama-shi, Wakayama 641-0007 (JP)**
- **HASHIKAWA, Akihiro**
  **Wakayama-shi, Wakayama 641-0007 (JP)**
- **UTAKA, Yoshimi**
  **Wakayama-shi, Wakayama 641-0007 (JP)**
- **OKAMURA, Daichi**
  **Wakayama-shi, Wakayama 641-0007 (JP)**
- **NAKANO, Yasuhiro**
  **Osaka-shi, Osaka 530-8323 (JP)**
- **MATSUMOTO, Haruna**
  **Osaka-shi, Osaka 530-8323 (JP)**

(74) Representative: **Hasegawa, Kan**
**Patentanwaltskanzlei Hasegawa**
**Untere Hauptstraße 56**
**85354 Freising (DE)**

(54) **POLYETHER NITRILE WITH IMPROVED CRYSTALLIZATION SPEED, METHOD FOR PRODUCING SAME, POLYETHER NITRILE RESIN COMPOSITION, AND METHOD FOR PRODUCING SAME**

(57) An object is to solve the problem that no reports have yet been made on a pure polyether nitrile that exhibits a semi-crystallization time of less than 120 seconds, which is considered to be a practical molding cycle, and provide a polyether nitrile from which a molded article can be produced with improved efficiency. As a solution, a polyether nitrile having a semi-crystallization time of 100 seconds or less at 275°C, the semi-crystallization time being determined by power-compensated differential scanning calorimetry when the polyether nitrile is cooled from a molten state at 370°C to 275°C at a cooling rate of 500°C per minute, is provided.

FIG. 1

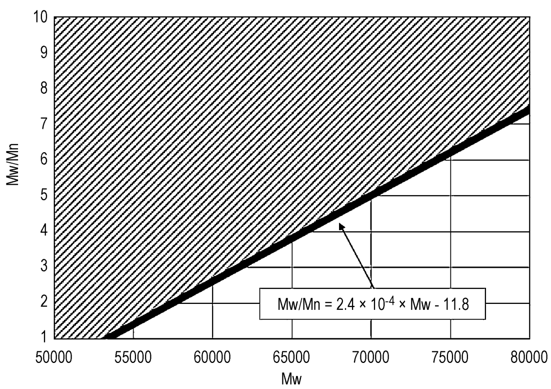


EP 4 585 635 A1

## Description

Technical Field

The present invention relates to a polyether nitrile excellent in crystallization speed during molding, a method for producing the polyether nitrile, and a composition thereof.

Background Art

Aromatic ether (co)polymers are not only excellent in heat resistance, flame resistance, chemical resistance, and mechanical strength but also are thermoplastic and can be molded by heating, and thus are useful resins that can provide various molded articles such as filaments, films, sheets, tubes, pipes, and round bars through molding methods such as injection molding, extrusion molding, and heat compression molding.

Polyether nitriles (see, for example, PTLs 1 to 4), which belong to the aromatic ether (co)polymers, are resins having the highest level of heat resistance and excellent in mechanical strength among thermoplastic resins. However, these polyether nitriles have a disadvantage in that their crystallization speed is low, and thus a sufficiently short molding cycle cannot be achieved during production of a molded article by heat molding such as injection molding.

Thus, attempts have been made to improve the crystallization speed of polyether nitriles by adding various crystal nucleating agents such as alumina, titanium dioxide, talc, and carbon black (see, for example, PTLs 5 and 6).

As methods for achieving a lower melting point while maintaining crystallinity, polyether nitriles obtained using small amounts of copolymer components are disclosed (see, for example, PTL 7).

Citation List

Patent Literature

PTL 1: Japanese Unexamined Patent Application Publication No. 59-206433
PTL 2: Japanese Unexamined Patent Application Publication No. 60-147439
PTL 3: Japanese Unexamined Patent Application Publication No. 61-055120
PTL 4: Japanese Unexamined Patent Application Publication No. 62-223226
PTL 5: Japanese Unexamined Patent Application Publication No. 62-240353
PTL 6: Japanese Unexamined Patent Application Publication No. 01-193354
PTL 7: International Publication No. 2021/241492

Summary of Invention

Technical Problem

No improvement in crystallization speed has been achieved with pure polyether nitriles composed only of polyether nitrile resins.

For example, semi-crystallization times at 280°C of a polyether nitrile (resorcin-polyether nitrile) synthesized from resorcin and 2,6-dichlorobenzonitrile, a polyether nitrile (hydroquinone-polyether nitrile) synthesized from hydroquinone and 2,6-dichlorobenzonitrile, and a polyether nitrile (biphenol-polyether nitrile) synthesized from **4,4'-**biphenol and 2,6-dichlorobenzonitrile, which are known polyether nitriles, have been measured to be 120 seconds, 200 seconds, and 685 seconds, respectively (PTL 6), and no reports have yet been made on a pure polyether nitrile that exhibits a semi-crystallization time of less than 120 seconds, which is considered to be a practical molding cycle.

Any of the polyether nitriles obtained using small amounts of copolymer components have lower cooling crystallization temperatures than the single-component polymers, and rather have lower crystallization speeds.

An object of the present invention is to overcome these conventional problems of polyether nitriles excellent in heat resistance and mechanical strength and provide a polyether nitrile from which a molded article can be produced with improved efficiency.

Solution to Problem

The present inventors have conducted intensive studies to achieve the above object and found that a polyether nitrile that requires a specific range of time for crystallization has an improved crystallization speed and thus can achieve a

short molding cycle during production of a molded article by heat molding such as injection molding, thereby completing the present invention. Furthermore, the inventors have found that having a molecular weight in a specific range provides sufficient mechanical strength, and have ascertained the relationship between the temperature of isothermal crystallization, the time required for crystallization, and the molecular weight and molecular weight distribution of polyether nitriles, as will be described in EXAMPLES given later, and found that a polyether nitrile satisfying specific conditions is excellent in crystallization speed.

The present invention is as follows.

1. A polyether nitrile having a semi-crystallization time of 100 seconds or less at 275°C, the semi-crystallization time being determined by power-compensated differential scanning calorimetry when the polyether nitrile is cooled from a molten state at 370°C to 275°C at a cooling rate of 500°C per minute.
2. The polyether nitrile according to 1., wherein a weight-average molecular weight (Mw) in terms of polystyrene determined by gel permeation chromatography analysis is 50,000 or more.
3. The polyether nitrile according to 2., wherein the weight-average molecular weight (Mw) and a number-average molecular weight (Mn) in terms of polystyrene determined by gel permeation chromatography analysis satisfy mathematical formula (i).

$$\text{Mathematical formula (i): } Mw/Mn \geq 2.4 \times 10^{-4} \times Mw - 11.8$$

4. The polyether nitrile according to any one of 1. to 3., wherein the polyether nitrile has a repeating unit represented by general formula (3).

[Chem. 1]

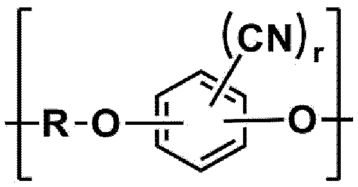

(3)

(In the formula, R represents a divalent group represented by general formula (1a) or general formula (1b), and r represents an integer of 1 to 4.)

[Chem. 2]

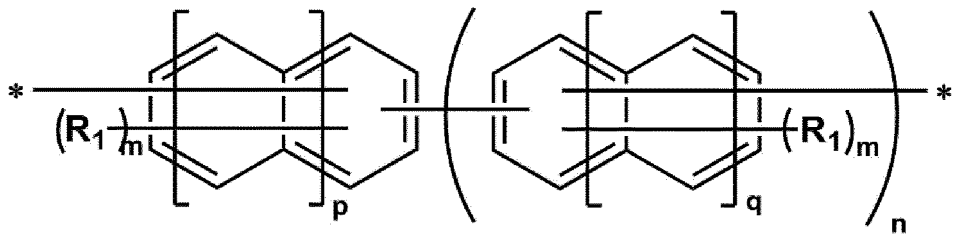

(1a)

(In the formula, each $R_1$ independently represents a linear or branched alkyl group having 1 to 6 carbon atoms, a cyclic alkyl group having 5 or 6 carbon atoms, or a phenyl group, each m independently represents an integer of 0 to 4, n represents 0 or 1, p and q represent 0, 1, or 2, and each * represents a bonding position.)

[Chem. 3]

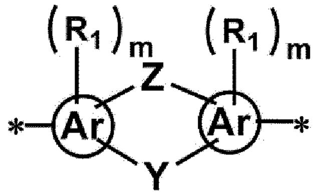

(1b)

(In the formula, $R_1$ and m are as defined in general formula (1a), Y represents an oxygen atom, a sulfur atom, a sulfonyl group, a carbonyl group, an alkylidene group having 1 to 15 carbon atoms, a fluorine-containing alkylidene group having 2 to 15 carbon atoms, a cycloalkylidene group having 5 to 15 carbon atoms, a phenylmethylidene group, a phenylethylidene group, a phenylene group, or a fluorenylidene group, Z represents an oxygen atom, a sulfur atom, or non-bridging, each Ar independently represents an aryl group having 6 to 8 carbon atoms, and each * represents a bonding position.)

5. The polyether nitrile according to 4., wherein R in general formula (3) above is represented by general formula (la’) or general formula (1a").

[Chem. 4]

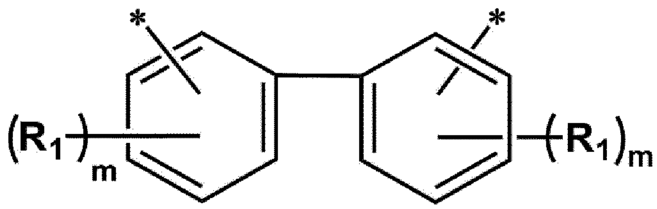

(1a')

(In the formula, $R_1$, m, and * are as defined in general formula (1a) above.)

[Chem. 5]

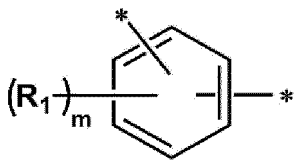

(1a")

(In the formula, $R_1$, m, and * are as defined in general formula (1a) above.)

6. The polyether nitrile according to 5., wherein the repeating unit represented by general formula (3) above is a repeating unit represented by general formula (3’).

[Chem. 6]

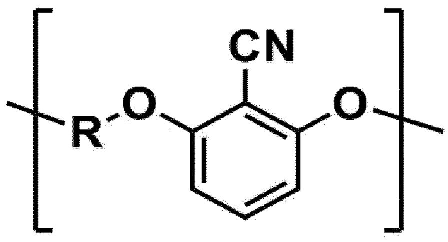

(3')

(In the formula, R is as defined in general formula (3) above.)

7. The polyether nitrile according to 6., wherein R in the repeating unit represented by general formula (3’) above is at least one group selected from divalent groups represented by structures below.

[Chem. 7]

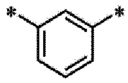
,
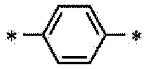
,
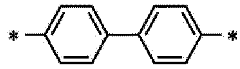

8. A polyether nitrile resin composition containing the polyether nitrile according to 1. and at least one selected from the group consisting of (A) to (C): a thermoplastic resin material (A), an additive (B), and a filler (C).
9. A method for producing the polyether nitrile according to 1., including mixing two or more raw-material polyether nitriles having different weight-average molecular weights.
10. The method for producing the polyether nitrile according to 9., wherein the polyether nitrile has a repeating unit represented by general formula (3).

[Chem. 8]

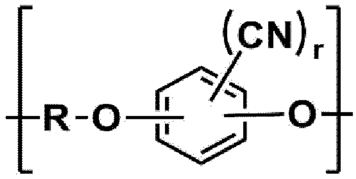
(3)

(In the formula, R represents a divalent group represented by general formula (1a) or general formula (1b), and r represents an integer of 1 to 4.)

[Chem. 9]

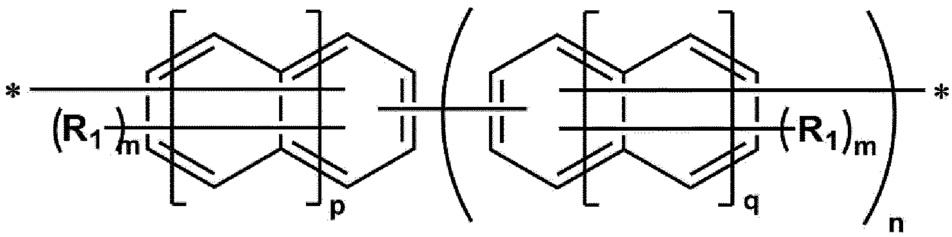
(1a)

(In the formula, each $R_1$ independently represents a linear or branched alkyl group having 1 to 6 carbon atoms, a cyclic alkyl group having 5 or 6 carbon atoms, or a phenyl group, each m independently represents an integer of 0 to 4, n represents 0 or 1, p and q represent 0, 1, or 2, and each * represents a bonding position.)

[Chem. 10]

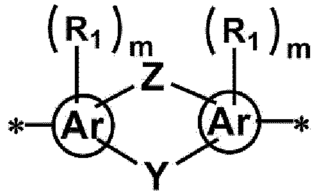
(1b)

(In the formula, $R_1$ and m are as defined in general formula (1a), Y represents an oxygen atom, a sulfur atom, a sulfonyl group, a carbonyl group, an alkylidene group having 1 to 15 carbon atoms, a fluorine-containing alkylidene group having 2 to 15 carbon atoms, a cycloalkylidene group having 5 to 15 carbon atoms, a phenylmethylidene group, a phenylethylidene group, a phenylene group, or a fluorenylidene group, Z represents an oxygen atom, a sulfur atom, or non-bridging, each Ar independently represents an aryl group having 6 to 8 carbon atoms, and each * represents a bonding position.)

11. The method for producing the polyether nitrile according to 10., wherein each of the two or more raw-material polyether nitriles having different weight-average molecular weights is a raw-material polyether nitrile having an identical repeating unit among repeating units represented by general formula (3) above.

12. A method for producing a polyether nitrile resin composition, including mixing two or more raw-material polyether nitriles having different weight-average molecular weights with at least one selected from the group consisting of (A) to (C): a thermoplastic resin material (A), an additive (B), and a filler (C), wherein when the two or more raw-material polyether nitriles are mixed, a polyether nitrile having a semi-crystallization time of 100 seconds or less at 275°C, the semi-crystallization time being determined by power-compensated differential scanning calorimetry when the polyether nitrile is cooled from a molten state at 370°C to 275°C at a cooling rate of 500°C per minute, is provided.

13. The method for producing a polyether nitrile resin composition according to 12., including:

a polyether nitrile mixing step of mixing the two or more raw-material polyether nitriles having different weight-average molecular weights to obtain a polyether nitrile having a semi-crystallization time of 100 seconds or less at 275°C, the semi-crystallization time being determined by power-compensated differential scanning calorimetry when the polyether nitrile is cooled from a molten state at 370°C to 275°C at a cooling rate of 500°C per minute; and then

a resin composition component mixing step of mixing the polyether nitrile obtained in the polyether nitrile mixing step with at least one selected from the group consisting of (A) to (C): the thermoplastic resin material (A), the additive (B), and the filler (C).

Advantageous Effects of Invention

The polyether nitrile according to the present invention has an improved crystallization speed, and thus can provide a molded article in a short molding cycle without the need for post-treatment such as annealing in heating molding, for example, injection molding, of a polyether nitrile excellent in heat resistance and mechanical strength. In addition, since the crystallization speed can be improved with a polyether nitrile resin component alone, the polyether nitrile according to the present invention, as compared with polyether nitrile resin compositions known in the art in which crystal nucleating agents are added, can provide a polyether nitrile molded article excellent in mechanical strength without a problem of embrittlement.

The method for producing the polyether nitrile according to the present invention is a method that includes performing mixing using two or more raw-material polyether nitriles having different weight-average molecular weights, that requires a short and reasonable reaction time for the production, and that is carried out by a simple and easy operation.

The polyether nitrile resin composition according to the present invention, in which the polyether nitrile having a high crystallization speed according to the present invention is used, can provide a molded article of the polyether nitrile resin composition that is excellent in heat resistance in a short molding cycle. In addition, the polyether nitrile resin composition according to the present invention is produced in a short and reasonable reaction time and can be produced by an industrially simple and easy operation.

Brief Description of Drawing

[Fig. 1] Fig. 1 is a graph showing the relationship between the molecular weight distribution (Mw/Mn) and the weight-average molecular weight (Mw) of a polyether nitrile, where Mw is in the range of 50,000 to 80,000, and Mw/Mn is in the range of 1 to 10, the region of polyether nitriles having a semi-crystallization time of 100 seconds or less at a temperature of 275°C being indicated by a shaded area. Description of Embodiments

(Polyether nitrile according to present invention)

A polyether nitrile according to the present invention has a semi-crystallization time of 100 seconds or less at 275°C, the semi-crystallization time being determined by power-compensated differential scanning calorimetry when the polyether nitrile is cooled from a molten state at 370°C to 275°C at a cooling rate of 500°C per minute. The semi-crystallization time is preferably 85 seconds or less, more preferably 70 seconds or less, particularly preferably 50 seconds or less. Since the semi-crystallization time is preferably as short as possible for a higher crystallization speed of the polyether nitrile, the lower limit of the range thereof is not particularly limited, but from the viewpoint of the production efficiency of a polyether nitrile molded article, it may be one second or more, or may be ten seconds or more.

The power-compensated differential scanning calorimetry is generally conducted in a nitrogen atmosphere.

The polyether nitrile according to the present invention preferably has a weight-average molecular weight (Mw) in terms of polystyrene of 50,000 or more as determined by gel permeation chromatography (GPC) analysis. A weight-average molecular weight of less than 40,000 is not preferred because it may lead to poor mechanical strength. To avoid

becoming difficult to mold, the weight-average molecular weight (Mw) is more preferably in the range of 50,000 or more and 1,000,000 or less, still more preferably in the range of 50,000 or more and 500,000 or less, particularly preferably in the range of 50,000 or more and 300,000 or less.

In the polyether nitrile according to the present invention, the weight-average molecular weight (Mw) and a number-average molecular weight (Mn) in terms of polystyrene determined by gel permeation chromatography (GPC) analysis preferably satisfy mathematical formula (i).

Mathematical formula (i): $Mw/Mn \geq 2.4 \times 10^{-4} \times Mw - 11.8$

This relationship has been found as a result of multiple regression analysis of the relationship between measured values of a weight-average molecular weight (Mw) and a molecular weight distribution (Mw/Mn) of a polyether nitrile and measured values of a temperature (T) at the time of semi-crystallization time measurement and a semi-crystallization time ($\tau c1/2$) at the temperature, as will be described in EXAMPLES given later. From this, it should be appreciated by those skilled in the art of the polyether nitrile according to the present invention that a polyether nitrile satisfying this relationship has a sufficient crystallization speed.

If the relation of mathematical formula (i) is satisfied, the semi-crystallization time at 275°C will be 100 seconds or less. Furthermore, if the relation of mathematical formula (ii) is satisfied, the semi-crystallization time at 275°C will be 85 seconds or less, which is more preferred, and if the relation of mathematical formula (iii) is satisfied, the semi-crystallization time at 275°C will be 50 seconds or less, which is particularly preferred.

$Mw/Mn \geq 2.4 \times 10^{-4} \times Mw - 11.4$ Mathematical formula (ii):

$Mw/Mn \geq 2.4 \times 10^{-4} \times Mw - 10.4$ Mathematical formula (iii):

The repeating unit included in the polyether nitrile according to the present invention is not particularly limited, but a polyether nitrile having a repeating unit represented by general formula (3) is preferred. Within the range of the repeating unit represented by general formula (3), only one repeating unit may be included, or two or more multiple repeating units may be included. Preferably, only one repeating unit is included.

[Chem. 11]

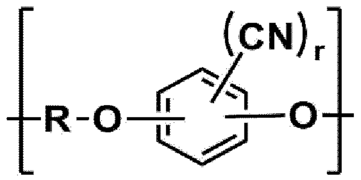

(3)

(In the formula, R represents a divalent group represented by general formula (1a) or general formula (1b), and r represents an integer of 1 to 4.)

[Chem. 12]

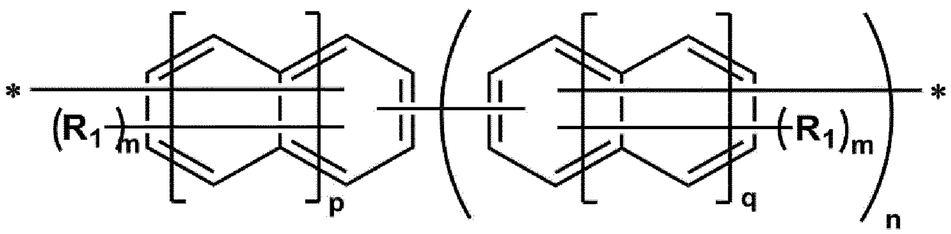

(1a)

(In the formula, each $R_1$ independently represents a linear or branched alkyl group having 1 to 6 carbon atoms, a cyclic alkyl group having 5 or 6 carbon atoms, or a phenyl group, each m independently represents an integer of 0 to 4, n represents 0 or 1, p and q represent 0, 1, or 2, and each * represents a bonding position.)

[Chem. 13]

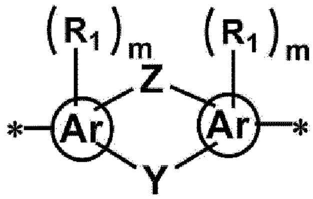

(1b)

(In the formula, $R_1$ and m are as defined in general formula (1a), Y represents an oxygen atom, a sulfur atom, a sulfonyl group, a carbonyl group, an alkylidene group having 1 to 15 carbon atoms, a fluorine-containing alkylidene group having 2 to 15 carbon atoms, a cycloalkylidene group having 5 to 15 carbon atoms, a phenylmethylidene group, a phenylethylidene group, a phenylene group, or a fluorenylidene group, Z represents an oxygen atom, a sulfur atom, or non-bridging, each Ar independently represents an aryl group having 6 to 8 carbon atoms, and each * represents a bonding position.)

Each $R_1$ in general formula (1a) independently represents a linear or branched alkyl group having 1 to 6 carbon atoms, a cyclic alkyl group having 5 or 6 carbon atoms, or a phenyl group, preferably a linear or branched alkyl group having 1 to 4 carbon atoms, a cyclic alkyl group having 5 or 6 carbon atoms, or a phenyl group, more preferably a linear or branched alkyl group having 1 to 4 carbon atoms or a phenyl group, particularly preferably an alkyl group having one carbon atom, that is, a methyl group.

In general formula (1a), m represents an integer of 0 to 4, preferably an integer of 0, 1, or 2, more preferably 0 or 1, particularly preferably 0.

In general formula (1a), n represents 0 or 1, preferably 1.

In general formula (1a), p and q each independently represent 0, 1, or 2, preferably 0 or 1, particularly preferably 0.

General formula (1a) where n is 1 and p and q are 0 is expressed as general formula (1a').

[Chem. 14]

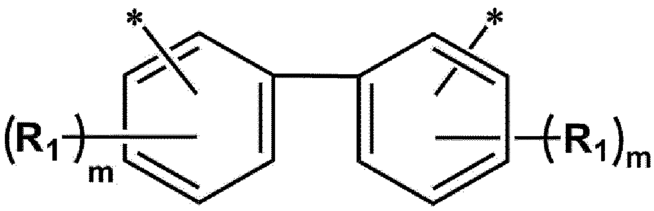

(1a')

(In the formula, $R_1$, m, and * are as defined in general formula (1a).)

The bonding positions in general formula (la') are preferably each independently the ortho or para position, particularly preferably both the para positions, with respect to the position of direct bonding between the two benzene rings. When m is 1 or 2, the bonding position of $R_1$ is preferably the meta position with respect to the position of direct bonding between the two benzene rings. Preferred forms of $R_1$ and m are the same as those in general formula (1a).

General formula (1a) where n, p, and q are 0 is expressed as general formula (1a").

[Chem. 15]

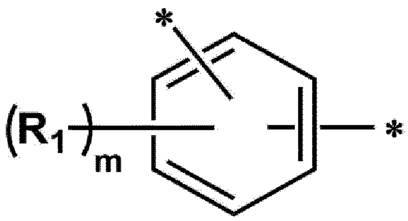

(1a")

(In the formula, $R_1$, m, and * are as defined in general formula (1a).)

The bonding position in general formula (1a") is preferably the para or meta position, particularly preferably the para position, with respect to the other bonding position. Preferred forms of $R_1$ and m are the same as those in general formula (1a).

General formula (1a) where n is 1 and p and q are 0, that is, general formula (1a'), or general formula (1a) where n, p, and q are 0, that is, general formula (1a"), are preferred.

$R_1$ and m in general formula (1b) are as defined in general formula (1a), and preferred forms are also the same.

Y in general formula (1b) represents an oxygen atom, a sulfur atom, a sulfonyl group, a carbonyl group, an alkylidene group having 1 to 15 carbon atoms, a fluorine-containing alkylidene group having 2 to 15 carbon atoms, a cyclic alkylidene group having 5 to 15 carbon atoms, a phenylmethylidene group, a phenylethylidene group, a phenylene group, or a fluorenylidene group, and the cyclic alkylidene group having 5 to 15 carbon atoms may include a branched-chain alkyl group. Specific examples of the cyclic alkylidene group include a cyclopentylidene group (5 carbon atoms), a cyclohexylidene group (6 carbon atoms), a 3-methylcyclohexylidene group (7 carbon atoms), a 4-methylcyclohexylidene group (7 carbon atoms), a 3,3,5-trimethylcyclohexylidene group (9 carbon atoms), a cycloheptylidene group (7 carbon atoms), and a cyclododecanylidene group (12 carbon atoms).

Y in general formula (1b) is preferably a sulfonyl group, a carbonyl group, an alkylidene group having 1 to 6 carbon atoms, a fluorine-containing alkylidene group having 2 to 6 carbon atoms, a cyclic alkylidene group having 5 to 12 carbon atoms, a phenylmethylidene group, a phenylethylidene group, a phenylene group, or a fluorenylidene group, more preferably a sulfonyl group, a carbonyl group, an alkylidene group having 1 to 3 carbon atoms, a fluorine-containing alkylidene group having 2 or 3 carbon atoms, a cyclic alkylidene group having 6 to 12 carbon atoms, a phenylmethylidene group, or a fluorenylidene group, still more preferably an alkylidene group having 3 carbon atoms, that is, a propylidene group, a fluorine-containing alkylidene group having 3 carbon atoms, that is, a fluorine-containing propylidene group, a cyclic alkylidene group having 6 to 12 carbon atoms, or a fluorenylidene group, particularly preferably a 2,2'-isopropylidene group, a 2,2'-hexafluoroisopropylidene group, a cyclohexylidene group, a 3,3,5-trimethylcyclohexylidene group, a cyclododecanylidene group, or a fluorenylidene group.

Z in general formula (1b) represents an oxygen atom, a sulfur atom, or non-bridging, preferably an oxygen atom or non-bridging, more preferably non-bridging.

Each Ar in general formula (1b) independently represents an aryl group having 6 to 8 carbon atoms, more preferably an aryl group having 6 carbon atoms.

R in general formula (3) is preferably a divalent group represented by general formula (1a), more preferably a divalent group represented by general formula (la') or a divalent group represented by general formula (1a"), particularly preferably at least one group selected from divalent groups represented by structures below.

[Chem. 16]

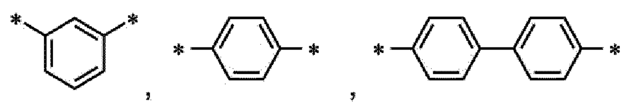

In general formula (3), r represents an integer of 1 to 4, preferably 1 or 2, more preferably 1. When r is 1, a repeating unit represented by general formula (3'), which includes ether bonds at both the ortho positions with respect to the cyano group, is preferred.

[Chem. 17]

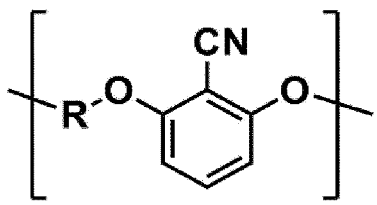

(3')

(In the formula, R is as defined in general formula (3).)

R in general formula (3) is preferably a divalent group represented by general formula (1a), more preferably a divalent group represented by general formula (la') or a divalent group represented by general formula (1a"), particularly preferably at least one group selected from divalent groups represented by structures below.

[Chem. 18]

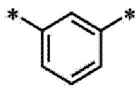
,
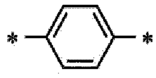
,
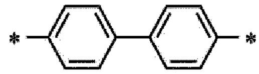

(In the formulas, each * represents a bonding position.)

(Method for producing polyether nitrile according to present invention)

The polyether nitrile according to the present invention can be produced by mixing two or more raw-material polyether nitriles having different weight-average molecular weights, the raw-material polyether nitriles being obtained by separately performing a polycondensation reaction in advance (method 1), or can be directly obtained by a polycondensation reaction (method 2).

Method 1 is preferred because the time for the polycondensation reaction for obtaining the raw-material polyether nitriles used in this method is short and reasonable, and the polyether nitrile can be produced by an easy operation. Each of the two or more raw-material polyether nitriles having different weight-average molecular weights is preferably a raw-material polyether nitrile obtained using the same aromatic dihydroxy compound (I) and the same dihalobenzonitrile compound (II) because the raw-material polyether nitriles can be mixed at the molecular level, the crystallization speed improves, and a tough molded article can be obtained with high crystallinity, more preferably a raw-material polyether nitrile having the same repeating unit among repeating units represented by general formula (3) above.

(Method 1)

· Method for producing raw-material polyether nitrile

The raw-material polyether nitriles used in method 1 for producing the polyether nitrile according to the present invention can be obtained by subjecting an aromatic dihydroxy compound (I) and a dihalobenzonitrile compound (II) to a polycondensation reaction in the presence of a basic compound. The polyether nitrile having a repeating unit represented by general formula (3) can be obtained by, for example, performing a polycondensation reaction in the presence of a basic compound using a compound represented by general formula (1) as the aromatic dihydroxy compound (I) and a compound represented by general formula (2) as the dihalobenzonitrile compound (II).

The reaction formula in this case is shown below.

[Chem. 19]

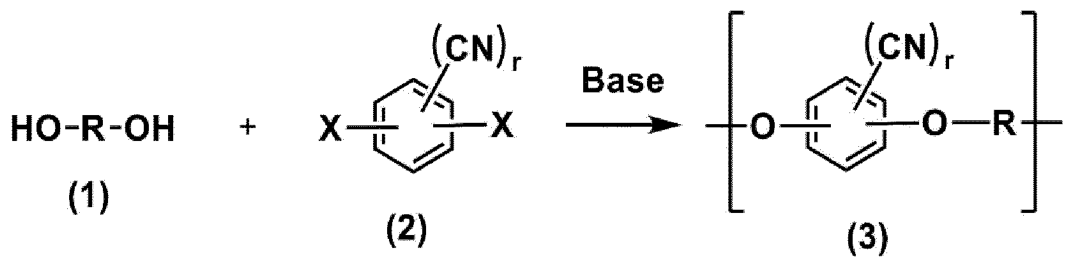

(1) (2) (3)

(In the formula, R and r are as defined in general formula (3), and each X independently represents a halogen atom.)

Alternatively, the polycondensation reaction may be carried out using a presynthesized alkali metal salt of the aromatic dihydroxy compound (I) and the dihalobenzonitrile compound (II).

<Aromatic dihydroxy compound (I)>

The aromatic dihydroxy compound (I) includes all aromatic compounds having two hydroxy groups, among which a compound represented by general formula (1) is preferred.

[Chem. 20]

**HO-R-OH** **(1)**

(In the formula, R is as defined in general formula (3).)

The definition and preferred forms of R in general formula (1) are the same as those in general formula (3).

Specific examples of the aromatic dihydroxy compound (I) include hydroquinone, resorcin, 2-phenylhydroquinone, 4,4'-biphenol, 3,3'-biphenol, 2,6-dihydroxynaphthalene, 2,7-dihydroxynaphthalene, 1,1'-bi-2-naphthol, 2,2'-bi-1-naphthol, 1,3-bis[1-methyl-1-(4-hydroxyphenyl)ethyl]benzene, 1,4-bis[1-methyl-1-(4-hydroxyphenyl)ethyl]benzene, 1,3-(4-hydroxybenzoylbenzene), 1,4-(4-hydroxybenzoylbenzene), 1,3-bis(4-hydroxyphenoxy)benzene, 1,4-bis(4-hydroxyphenoxy) benzene, 1,4-bis(4-hydroxyphenyl)benzene, 1,3-bis(4-hydroxyphenyl)benzene, 4,4'-isopropylidene biphenol (Bis-A), 2,2-bis(4-hydroxyphenyl)-1,1,1,3,3,3-hexafluoropropane, 4,4'-bishydroxybenzophenone, 4,4'-bishydroxydiphenylsulfone, 4,4'-dihydroxydiphenyl ether, bis(4-hydroxyphenyl)methane, 9,9-bis(4-hydroxyphenyl) fluorene, 9,9-bis(3-phenyl-4-hydroxyphenyl)fluorene, 9,9-bis(3,5-diphenyl-4-hydroxyphenyl)fluorene, 9,9-bis(4-hydroxy-3-methylphenyl)fluorene, 9,9-bis(4-hydroxy-3,5-dimethylphenyl)fluorene, 9,9-bis(4-hydroxy-3-cyclohexylphenyl) fluorene, 4,4'-isopropylidene bis(2-phenylphenol), bisphenol Z (1,1-bis(4-hydroxyphenyl)cyclohexane), bisphenol TMC (1,1-bis(4-hydroxyphenyl)-3,3,5-trimethylcyclohexane), 1,1-bis(4-hydroxyphenyl)cyclododecane, and 1,1-bis(4-hydroxyphenyl)-1-phenylethane.

Of these, hydroquinone, resorcin, and 4,4'-biphenol are preferred, and 4,4'-biphenol is particularly preferred.

<Dihalobenzonitrile compound (II)>

The dihalobenzonitrile compound (II) includes all benzonitrile compounds having two halogen groups, among which a compound represented by general formula (2) is preferred.

[Chem. 21]

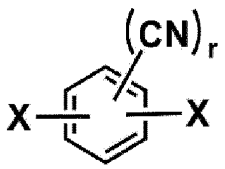

(2)

(In the formula, r is as defined in general formula (3), and each X independently represents a halogen atom.)

Each X in general formula (2) independently represents a halogen atom, preferably independently represents a chlorine atom, a bromine atom, or an iodine atom, more preferably independently represents a chlorine atom or a bromine atom, particularly preferably represents a chlorine atom.

In general formula (2), r represents an integer of 1 to 4, preferably 1 or 2, more preferably 1. When r is 1, a structure configuration represented by general formula (2') in which halogen atoms are bonded to both the ortho positions with respect to the cyano group is preferred.

[Chem. 22]

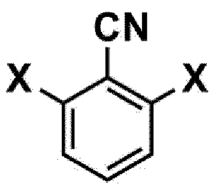

(2')

Specific examples of the dihalobenzonitrile compound (II) include 2,6-difluorobenzonitrile, 2,5-difluorobenzonitrile, 2,4-difluorobenzonitrile, 2,6-dichlorobenzonitrile, 2,5-dichlorobenzonitrile, 2,4-dichlorobenzonitrile, 2,6-dibromobenzonitrile, 2,5-dibromobenzonitrile, 2,4-dibromobenzonitrile, 2,6-dinitrobenzonitrile, 2,5-dinitrobenzonitrile, 2,4-dinitrobenzonitrile, and 1,4-dichloro-2,5-dicyanobenzene. The dihalobenzonitrile compound (II) may also be a reactive derivative thereof. Of these, 2,6-difluorobenzonitrile and 2,6-dichlorobenzonitrile are suitable for use from the viewpoint of, for example, reactivity and economic efficiency. These compounds may also be used in combination of two or more.

Examples of the reactive derivative include, in the case of structures derived from 2,6-dihalobenzonitrile, compounds that can react with aromatic dihydroxy compounds as represented by the following general formulas, and these mean compounds derived from the reactions between two 2,6-dihalobenzonitriles and between 2,6-dihalobenzonitrile and an aromatic dihydroxy compound.

[Chem. 23]

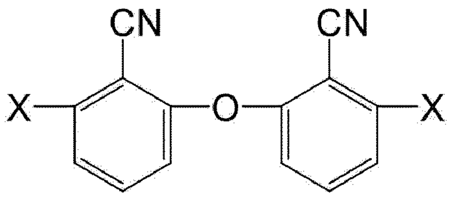

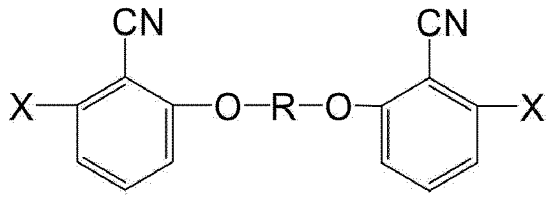

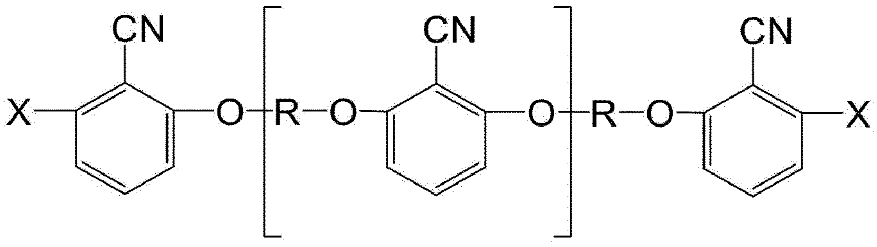

(In the formulas, R is as defined in general formula (3), and X is as defined in general formula (2).)

The molar ratio of the aromatic dihydroxy compound (I) used relative to the dihalobenzonitrile compound (II) can be freely selected according to the desired molecular weight, but is typically in the range of 0.5 to 2.0.

For example, when it is desired to obtain a polymer having a molecular weight such that the average number of units of the repeating unit represented by general formula (3) is more than 10, the molar ratio is preferably in the range of 0.9 to 1.1, more preferably in the range of 0.95 to 1.05, particularly preferably in the range of 0.99 to 1.01. To maximize the polymerization rate in the polycondensation reaction, the aromatic dihydroxy compound (I) and the dihalobenzonitrile compound (II) are preferably used at a molar ratio of substantially 1.00.

On the other hand, when it is desired to obtain a polymer having a low molecular weight such that the average number of units of the repeating unit represented by general formula (3) is 10 or less, the molar ratio is preferably in the range of 0.5 to 0.9 or in the range of 1.1 to 2.0.

The aromatic dihydroxy compound (I) and the dihalobenzonitrile compound (II) may each be a combination of two or more compounds, but are preferably each a single compound from the viewpoint of improvement in crystallization speed, high crystallinity, and toughness of a molded article to be obtained. When two or more compounds are used for each, they are used such that the molar ratio between the total amount of the compounds as the aromatic dihydroxy compound (I) and the total amount of the compounds as the dihalobenzonitrile compound (II) is as described above.

<Basic compound>

The basic compound may be any organic or inorganic compound as long as it promotes the desalting polycondensation reaction and does not affect the quality, but is preferably an inorganic compound, especially preferably an alkali metal compound or an alkaline-earth metal compound, particularly preferably an alkali metal compound.

Organic bases include tetramethylammonium hydroxide, triethylamine, N,N-diisopropylethylamine, 1,1,3,3-tetramethylguanidine (TMG), N,N-dimethyl-4-aminopyridine (DMAP), 2,6-lutidine, pyridine, 1,8-diazabicyclo[5.4.0]-7-undecene (DBU), 1,5-diazabicyclo[4.3.0]-5-nonene (DBN), 7-methyl-1,5,7-triazabicyclo[4.4.0]dec-5-ene (MTBD), 1,5,7-triazabicyclo[4.4.0]dec-5-ene (TBD), 1,8-bis(dimethylaminonaphthalene) (DMAN), 1,4-diazabicyclo[2.2.2]octane (DABCO), tert-butylimino-tri(pyrrolidino)phosphorane, tert-butylimino-tris(dimethylamino)phosphorane, 2-tert-butylimino-2-diethylamino-1,3-dimethylperhydro-1,3,2-diazaphosphorine, tert-octylimino-tris(dimethylamino)phosphorane, phosphazene base $P_2$-Et, phosphazene base $P_2$-t-Bu, phosphazene base $P_3$-t-Bu, phosphazene base $P_4$-t-Bu, and phosphazene base $P_4$-t-Oct.

Among inorganic bases, alkali metal compounds include alkali metals such as lithium, rubidium, cesium, potassium, and sodium, alkali metal hydrides such as lithium hydride, rubidium hydride, cesium hydride, potassium hydride, and sodium hydride, alkali metal hydroxides such as lithium hydroxide, rubidium hydroxide, cesium hydroxide, potassium hydroxide, and sodium hydroxide, alkali metal carbonates such as lithium carbonate, rubidium carbonate, cesium carbonate, potassium carbonate, and sodium carbonate, and alkali metal hydrogen carbonates such as lithium hydrogen carbonate, rubidium hydrogen carbonate, cesium hydrogen carbonate, potassium hydrogen carbonate, and

sodium hydrogen carbonate. These may be used alone or in combination of two or more.

By using these alkali metal compounds having a specific surface area of 0.3 $m^2/g$ or more, the desalting polycondensation reaction can be carried out with high efficiency. The specific surface area of the alkali metal compound is preferably 0.8 $m^2/g$ or more, more preferably 1.2 $m^2/g$ or more. By using an alkali metal compound having a larger specific surface area, the chance of contact between the catalyst and the reaction raw materials is further increased, and the desalting polycondensation reaction can be carried out with higher efficiency. When the specific surface area is smaller than 0.3 $m^2/g$, the desalting polycondensation reaction cannot be carried out with sufficiently high efficiency unless the amount of catalyst is increased, but an increase in the amount of catalyst is not preferred because the polycondensate quality is affected.

From the above, the basic compound in the production method according to the present invention is preferably an alkali metal carbonate such as lithium carbonate, rubidium carbonate, cesium carbonate, potassium carbonate, or sodium carbonate, more preferably lithium carbonate, potassium carbonate, or sodium carbonate, particularly preferably potassium carbonate or sodium carbonate having a specific surface area of 0.3 $m^2/g$ or more from the viewpoint of availability.

The amount of the basic compound used in the polycondensation reaction for obtaining the raw-material polyether nitriles, for example, in the case of an alkali metal compound, is usually preferably 2 moles or more per mole of the aromatic dihydroxy compound (I) in terms of alkali metal ions contained, but side reactions such as ether bond cleavage will occur during the polycondensation if used in large excess. Thus, the amount used is more preferably in the range of 2 to 4 moles, still more preferably in the range of 2 to 2.4 moles, particularly preferably in the range of 2 to 2.2 moles, per mole of the aromatic dihydroxy compound (I).

When the aromatic dihydroxy compound (I) and the dihalobenzonitrile compound (II) are used at a molar ratio of substantially 1.00 in order to maximize the polymerization rate of the polycondensation reaction, if the basic compound is used in an amount ranging from 2 to 1 mole per mole of the aromatic dihydroxy compound (I) in terms of alkali metal ions, it is also possible to produce a polyether nitrile having a molecular weight such that the average number of units of general formula (3) is from infinity to 1.

<Reaction solvent>

In the polycondensation reaction for obtaining the raw-material polyether nitriles, a reaction solvent can be used, and it is preferable to use an aprotic solvent as the reaction solvent.

Specific examples of the aprotic solvent include N,N-dimethylacetamide, N,N-dimethylformamide, N-methyl-2-pyrolidone, 1,3-dimethyl-2-imidazolidinone, γ-butyrolactone, sulfolane, dimethyl sulfoxide, diethyl sulfoxide, dimethyl sulfone, diethyl sulfone, diisopropyl sulfone, diphenyl sulfone, diphenyl ether, benzophenone, dialkoxybenzenes (the number of carbon atoms in the alkoxy group, 1 to 4), and trialkoxybenzenes (the number of carbon atoms in the alkoxy group, 1 to 4). Among these solvents, high-permittivity polar organic solvents such as N-methyl-2-pyrolidone, N,N-dimethylacetamide, sulfolane, diphenyl sulfone, and dimethyl sulfoxide are particularly suitable for use. These may be used alone or in combination of two or more.

The amount of the aprotic solvent used is not particularly limited as long as the raw materials are homogeneously dissolved and the alkali metal salt is stirred and dispersed well. Any amount that maximizes the volume efficiency of a polycondensation reactor may be chosen according to the raw materials used and the target polymer. Typically, the amount is chosen in the range of 0.5 to 20 times the total weight of the raw materials and the alkali metal salt.

<Method of polycondensation reaction>

The polycondensation reaction for obtaining the raw-material polyether nitriles may be carried out through divided steps of an oligomer formation step (A) and a polymerization step (B), in which the reaction is carried out in different ways, or through a single undivided step.

The oligomer formation step (A) is a step of subjecting the aromatic dihydroxy compound (I) and the dihalobenzonitrile compound (II) to a polycondensation reaction in the presence of a basic compound to form an oligomer. The oligomer in this case is not particularly limited, and a polycondensation reaction product having a polymer reduced viscosity of about less than 1 is referred to as an oligomer.

The polymer formation step (B) is a step of further subjecting the oligomer obtained in the step (A) to the polycondensation reaction to form a polymer. As the oligomer at this time, the polycondensation reaction liquid in the step (A) can be used as it is, or an oligomer isolated by additionally performing the step (A) can also be used.

The polycondensation reaction for obtaining the polyether nitrile according to the present invention involves an operation to remove water generated during a desalting reaction out of the system. The method of the operation is, for example, a method in which the reaction is run at a temperature at which the desalting reaction proceeds in the presence of a solvent that forms an azeotrope with water, and during the reaction, water is distilled off the reaction mixture by means of

the solvent that forms an azeotrope with water. This allows the reaction to be maintained in a substantially anhydrous state.

The temperature at which the desalting reaction starts is typically around 130°C, while depending on the raw materials. For example, in the case of using 4,4'-biphenol as the aromatic dihydroxy compound (I), 2,6-dichlorobenzonitrile as the dihalobenzonitrile compound (II), potassium carbonate, sulfolane (boiling point 285°C) as an aprotic solvent, and toluene as the solvent that forms an azeotrope with water, the reaction temperature is preferably in the range of 130°C to 170°C.

Specific examples of the solvent that forms an azeotrope with water include aromatic hydrocarbons such as benzene, toluene, xylene, hexane, cyclohexane, octane, chlorobenzene, dioxane, tetrahydrofuran, anisole, and phenetole. These can be used alone or in combination of two or more.

When the solvent that forms an azeotrope with water is used, it is preferable to use the solvent that forms an azeotrope with water in an amount in the range of 1 to 100 parts by weight relative to 100 parts by weight of the aprotic solvent, more preferably in the range of 1 to 10 parts by weight, still more preferably in the range of 2 to 5 parts by weight, from the viewpoint of volume efficiency and solvent recovery.

When the reaction is continued, it is preferable to maintain the reaction system in a substantially anhydrous state while removing water produced as a result of the reaction. When the water produced is not sufficiently removed, the water may react with the dihalobenzonitrile compound (II) to form a by-product having a phenol skeleton, resulting in the production of a low-molecular-weight product alone. That is, to obtain a high-molecular-weight polyether nitrile, the reaction system preferably contains substantially no water, preferably less than 0.5 wt% of water.

<Polycondensation reaction conditions>

The temperature during the polycondensation reaction for obtaining the raw-material polyether nitriles is in the range of 140°C to 300°C. Within this range, the reaction may be continued at a constant temperature, or the temperature may be increased as the polycondensation reaction proceeds.

When the polycondensation reaction is carried out through divided steps of the oligomer formation step (A) and the polymerization step (B), the temperature in the oligomer formation step (A) is preferably in the range of 140°C to 200°C, more preferably in the range of 150°C to 170°C, still more preferably in the range of 155°C to 165°C, and the temperature in the polymerization step (B) is preferably in the range of 200°C to 300°C, more preferably in the range of 210°C to 270°C, still more preferably in the range of 210°C to 240°C, particularly preferably in the range 215°C to 230°C.

For example, in the case of using 4,4'-biphenol as the aromatic dihydroxy compound (I), 2,6-dichlorobenzonitrile as the dihalobenzonitrile compound (II), potassium carbonate, sulfolane (boiling point 285°C) as an aprotic solvent, and toluene as the solvent that forms an azeotrope with water, the temperature is preferably in the range of 190°C to 280°C.

The pressure may be normal pressure, or may be a higher or lower pressure.

The polycondensation reaction is preferably carried out under atmospheric pressure in an inert atmosphere such as a nitrogen atmosphere.

The reaction time of the polycondensation reaction for obtaining the raw-material polyether nitriles varies depending on the molar ratio between the aromatic dihydroxy compound (I) and the dihalobenzonitrile compound (II) and the amount of the basic compound used and can be freely selected according to the molecular weight of the target polyether nitrile, but is typically 3 to 20 hours.

<Post-reaction treatment>

The polycondensation reaction product after completion of the polycondensation reaction for obtaining the raw-material polyether nitriles can be used as a raw-material polyether nitrile without any treatment, but it is preferable to perform a post-reaction treatment. The polycondensation reaction product may be taken out from a reactor, solidified by cooling, then pulverized, and subjected to subsequent cleaning, drying, and molding material (pellet or chip) production steps; alternatively, the polycondensation reaction product taken out from the reactor may be directly put into a cleaning tank in the cleaning step, or a solvent for use in the cleaning step described below may be poured into the reactor after completion of the polycondensation reaction to transfer the product in slurry form or wax form to the cleaning step.

The cleaning step is a step of performing cleaning to remove salts, reaction solvents, and the like contained in the polycondensation reaction product obtained by the polycondensation reaction.

In this cleaning step, preferably, the reaction solvent in the polycondensation reaction product is subjected to extraction cleaning by a known method using a solvent such as an alcohol, a ketone, an aromatic hydrocarbon, an aliphatic hydrocarbon, or water, and then the salt resulting from the desalting reaction in the polycondensation reaction product is removed by cleaning with preferably water.

In a specific operation, the polycondensation reaction product in pulverized, slurry, or wax form is transferred to a container equipped with a stirrer, and an operation of stirring cleaning with a cleaning solvent and filtration is repeated until the contents of the reaction solvent and the salt fall below the desired levels.

As an apparatus, for example, a combination of a cleaning tank with a pressure filter or a centrifuge, or a multifunctional filtration system capable of performing cleaning, filtration, and drying by itself may be used.

Specific examples, excluding water, of solvents for extraction cleaning of the reaction solvent include alcohols such as methanol, ethanol, propyl alcohol, isopropyl alcohol, butyl alcohol, isobutyl alcohol, sec-butyl alcohol, t-butyl alcohol, n-amyl alcohol, isoamyl alcohol, t-amyl alcohol, n-hexyl alcohol, cyclohexanol, n-octyl alcohol, and capryl alcohol; ketones such as acetone, methyl ethyl ketone, methyl n-propyl ketone, diethyl ketone, 2-hexanone, 3-hexanone, methyl-t-butyl ketone, di-n-propyl ketone, diisopropyl ketone, diisobutyl ketone, di-n-amyl ketone, diacetyl, acetylacetone, cyclohexanone, and benzophenone; aliphatic hydrocarbons including saturated aliphatic hydrocarbons such as n-hexane, 2-methylhebtane, 3-methylhebtane, 2,2-dimethylbutane, 2,3-dimethylbutane, n-hebtane, 2-methylhexane, 3-methylhexane, 2,2-dimethylpentane, 2,3-dimethylpentane, 2.4-dimethylpentane, 3,3-dimethylpentane, 3-ethylpentane, 2,2.3-trimethylbutane, and cyclohexane and unsaturated hydrocarbons such as 1-hexene, 1-heptene, 1-octene, and cyclohexene; and aromatic hydrocarbons such as benzene, toluene, o-xylene, m-xylene, p-xylene, ethylbenzene, n-propylbenzene, cumene, n-butylbenzene, t-butylbenzene, styrene, and allylbenzene.

Of these, for example, methanol, ethanol, acetone, methyl ethyl ketone, xylene, and toluene are preferred, and acetone and methanol are particularly preferred in terms of operability and ease of distillation recovery of the reaction solvent after cleaning.

For the cleaning of the alkali metal salt such as potassium chloride resulting from the desalting polycondensation reaction, water is preferably used, or acidic water containing oxalic acid or acetic acid at a low concentration may be used.

For the conditions of this cleaning step, the amount of cleaning solvent used, the number of times of cleaning, and the cleaning temperature may be appropriately selected according to the amounts of residual reaction solvent and residual alkali metal salt desired to be removed.

The drying step is a step of drying the polycondensation reaction product subjected to the cleaning step.

The water-containing polycondensation reaction product that has been through the cleaning is dried by a known method. As a dryer, a known apparatus such as an evaporator, a shelf-type oven, or a tumbler can be used.

The target water content is typically 0.5 wt% or less, preferably 0.4 wt% or less, more preferably 0.3 wt% or less.

This drying step may be performed under any conditions as long as the temperature is equal to or lower than the melting point of the polycondensation reaction product and water can be removed. To avoid contact with air as much as possible, the drying step is preferably performed under reduced pressure in an inert gas (e.g., nitrogen or argon) atmosphere or under a stream of inert gas. The dried polycondensation reaction product is basically a powder.

The raw-material polyether nitriles may be shaped as a molding material (pellets, chips, or the like) for producing a polyether nitrile molded article. The method of producing such a molding material is not particularly limited, and a raw-material polyether nitrile in powder form obtained as described above may be subjected to heat melting and molded into the shape of a molding material such as pellets or chips. These heat melting and molding operations are preferably performed under exclusion of oxygen or in an inert atmosphere such as nitrogen.

For the production of a molding material such as pellets or chips, a melt-kneading apparatus such as a single-screw, twin-screw, or multi-screw extruder, a Banbury mixer, a kneader, or a roller is typically used, but a molding material such as pellets or chips may be produced by cutting a sheet prepared using a compression molding machine.

An industrially preferred process in producing a molding material is as follows. The polyether nitrile powder obtained through polycondensation, pulverization, cleaning, and vacuum drying is directly transferred to, for example, a silo sealed with nitrogen gas or the like and stored there without being exposed to the outside air. When formed into a shape such as pellets or chips, the powder is transferred to an extruder together with nitrogen gas through a pipe without any treatment. The powder is then melt-kneaded in no contact with oxygen (air), and a molten polymer from a die is pelletized by cutting in water or water-cooled cutting of a strand.

For the conditions of the process of producing this molding material (pellets or chips), in melt processing, the operation described above is performed at a temperature sufficient to melt the polymer. The upper limit of the temperature in the melt processing is 500°C or lower. The raw-material polyether nitrile used in Examples, which is obtained using biphenol and 2,6-dichlorobenzonitrile, has a melting point of about 345°C and thus is preferably processed at a temperature higher than the melting point, 360°C or higher. The upper limit of the temperature is preferably 480°C or lower, more preferably 450°C or lower, still more preferably 430°C or lower, particularly preferably 400°C or lower.

· Mixing of raw-material polyether nitriles

Two or more raw-material polyether nitriles having different weight-average molecular weights are separately produced by the above-described method, and the raw-material polyether nitriles are mixed in appropriate amounts so as to provide the polyether nitrile according to the present invention, whereby the polyether nitrile according to the present invention can be produced. More specifically, they are mixed in appropriate amounts so as to give the desired Mw and Mn of the polyether nitrile according to the present invention in consideration of the Mw and Mn of the raw-material polyether nitriles.

When a polyether nitrile having a semi-crystallization time of 100 seconds or less at 275°C is produced, it is preferable to mix the raw-material polyether nitriles so as to satisfy the relation of mathematical formula (i). When a polyether nitrile having a semi-crystallization time of 85 seconds or less at 275°C is produced, it is more preferable to mix the raw-material polyether nitriles so as to satisfy the relation of mathematical formula (ii). When a polyether nitrile having a semi-crystallization time of 50 seconds or less at 275°C is produced, it is particularly preferable to mix the raw-material polyether nitriles so as to satisfy the relation of mathematical formula (iii).

Alternatively, by using the polyether nitrile according to the present invention as one of the raw-material polyether nitriles to be mixed, the semi-crystallization time of the polyether nitrile for use being shortened or lengthened in order to achieve a desired molding cycle, the polyether nitrile according to the present invention can be produced.

The form of the raw-material polyether nitriles to be mixed is not particularly limited, and specific examples include a polycondensation reaction product after completion of the polycondensation reaction for obtaining the raw-material polyether nitriles, a cleaned polycondensation reaction product, a powder, and a molding material (pellets, chips, or the like) shape. Of these, the form of a powder or a molding material (pellets, chips, or the like) shape is preferred, and a powder is particularly preferred.

The form of the two or more raw-material polyether nitriles having different weight-average molecular weights to be subjected to the mixing operation is not particularly limited, and examples include all polycondensation reaction products, all powders, all molding material shapes, polycondensation reaction products and powders, polycondensation reaction products and molding material shapes, and powders and molding material shapes. Of these, the form is preferably all powders, all molding material shapes, or powders and molding material shapes, more preferably all powders.

When the two or more raw-material polyether nitriles are mixed in the form of all powders, mixed in the form of all molding material shapes, or mixed in the form of powders and molding material shapes, they may be mixed without being melted, or may be mixed after being melted by heating. When they are mixed after being melted by heating, the mixture may be used as it is in the process of producing a molding material described later.

When mixing is performed including the forms of a polycondensation reaction product and a cleaned polycondensation reaction product, after the polyether nitrile according to the present invention is obtained by this mixing, a treatment is preferably performed on the basis of the method of the post-reaction treatment described above to remove salts, reaction solvents, and the like contained in the polycondensation reaction product or remove contained water. By performing this treatment, a powder of the polyether nitrile according to the present invention can be obtained.

This mixing operation is preferably performed under exclusion of oxygen or in an inert atmosphere such as nitrogen in order to obtain a polyether nitrile having high melt flowability.

(Method 2)

In the case where the polyether nitrile according to the present invention is directly obtained by a polycondensation reaction (method 2), it can be obtained by subjecting an aromatic dihydroxy compound (I) and a dihalobenzonitrile compound (II) to a polycondensation reaction in the presence of a basic compound in the same manner as the raw-material polyether nitriles are produced.

The types of aromatic dihydroxy compounds (I), dihalobenzonitrile compounds (II), and basic compounds that can be used in the polycondensation reaction, the type and amount of reaction solvent, the method of the polycondensation reaction, and the polycondensation reaction conditions are the same as those in the polycondensation reaction for the raw-material polyether nitriles described above.

The aromatic dihydroxy compound (I) and the dihalobenzonitrile compound (II) may each be a combination of two or more compounds, but are preferably each a single compound from the viewpoint of improvement in crystallization speed, high crystallinity, and toughness of a molded article to be obtained. When two or more compounds are used for each, they are used such that the molar ratio between the total amount of the compounds as the aromatic dihydroxy compound (I) and the total amount of the compounds as the dihalobenzonitrile compound (II) is as described above.

The molar ratio at which the aromatic dihydroxy compound (I) and the dihalobenzonitrile compound (II) are used is substantially 1.00, and the polycondensation reaction is carried out using the basic compound in an amount of 1 mole or more per mole of the aromatic dihydroxy compound (I) in terms of alkali metal ions contained, in the case of an alkali metal compound, for example.

For the time of the polycondensation reaction, the reaction is continued to a region where the reduced viscosity of the polyether nitrile decreases after increasing as the polycondensation reaction proceeds and reaching a maximum, whereby the polyether nitrile according to the present invention can be obtained. Specifically, depending on conditions such as the amount of the basic compound used and the reaction temperature, the polyether nitrile according to the present invention can be obtained by continuing the polycondensation reaction for a time in the range of 15 to 50 hours, preferably in the range of 20 to 50 hours.

<Post-reaction treatment>

The polycondensation reaction product after completion of the polycondensation reaction for obtaining the polyether nitrile according to the present invention may be taken out from a reactor, solidified by cooling, then pulverized, and subjected to subsequent cleaning, drying, and molding material (pellet or chip) production steps; alternatively, the polycondensation reaction product taken out from the reactor may be directly put into a cleaning tank in the cleaning step, or a solvent for use in the cleaning step described below may be poured into the reactor after completion of the polycondensation reaction to transfer the product in slurry form or wax form to the cleaning step.
The cleaning step and the drying step performed on the polycondensation reaction product after completion of the polycondensation reaction for obtaining the polyether nitrile according to the present invention can be carried out in the same manner as the cleaning step and the drying step performed on the polycondensation reaction product after completion of the polycondensation reaction for obtaining the raw-material polyether nitriles described above.

(Molding material of polyether nitrile according to present invention)

The polyether nitrile according to the present invention obtained by method 1 or method 2 described above can be shaped as a molding material (pellets, chips, or the like) for producing a molded article. The method of producing the molding material is not particularly limited, and the polyether nitrile according to the present invention obtained as described above may be subjected to heat melting and molded into the shape of a molding material such as pellets or chips. These heat melting and molding operations are preferably performed under exclusion of oxygen or in an inert atmosphere such as nitrogen.
For the production of a molding material such as pellets or chips, a melt-kneading apparatus such as a single-screw, twin-screw, or multi-screw extruder, a Banbury mixer, a kneader, or a roller is typically used, but a molding material such as pellets or chips may be produced by cutting a sheet prepared using a compression molding machine.
An industrially preferred process in producing a molding material is as follows. The polyether nitrile powder obtained through polycondensation, pulverization, cleaning, and vacuum drying is directly transferred to, for example, a silo sealed with nitrogen gas or the like and stored there without being exposed to the outside air. When formed into a shape such as pellets or chips, the powder is transferred to an extruder together with nitrogen gas through a pipe without any treatment. The powder is then melt-kneaded in no contact with oxygen (air), and a molten polymer from a die is pelletized by cutting in water or water-cooled cutting of a strand.
For the conditions of the process of producing this molding material (pellets or chips), in melt processing, the operation described above is performed at a temperature sufficient to melt the polymer. The upper limit of the temperature in the melt processing is 500°C or lower. The polyether nitrile powder used in Examples, which is obtained using biphenol, has a melting point of about 345°C and thus is preferably processed at a temperature higher than the melting point, 360°C or higher. The upper limit of the temperature is preferably 480°C or lower, more preferably 450°C or lower, still more preferably 430°C or lower, particularly preferably 400°C or lower.

(Polyether nitrile resin composition according to present invention)

The polyether nitrile according to the present invention can be mixed with at least one selected from the group consisting of a thermoplastic resin material (A), an additive (B), and a filler (C) to provide a polyether nitrile resin composition. The polyether nitrile according to the present invention used here is preferably a polyether nitrile obtained by method 1.
Specific examples of the thermoplastic resin material (A) contained in the polyether nitrile resin composition include high-density polyethylene, medium-density polyethylene, isotactic polypropylene, acrylonitrile-butadiene-styrene (ABS) resin, acrylonitrile-styrene (AS) resin, acrylic resin, fluorocarbon resin (e.g., polytetrafluoroethylene), polyester, polycarbonate, polyarylate, aliphatic polyamide, aromatic polyamide, polysulfone, polyether sulfone, polyether ketone, polyether ether ketone, polyphenylene sulfide, polyetherimide, polyamide-imide, polyesterimide, and modified polyphenylene oxide.
Specific examples of the additive (B) contained in the polyether nitrile resin composition include hydrophilic agents, antioxidants, secondary antioxidants, flame retardants, flame retardant aids, plasticizers, lubricants, release agents, antifogging agents, weathering stabilizers, light stabilizers, hydrolysis resistance improvers, flowability improvers, UV absorbers, antistatic agents, metal deactivators, near-infrared absorbers, and colorants (dyes and pigments).
Specific examples of the filler (C) contained in the polyether nitrile resin composition include various metal powders, powders of inorganic acid metal salts (e.g., calcium carbonate, zinc borate, calcium borate, zinc stannate, calcium sulfate, and barium sulfate), powders of metal oxides (e.g., magnesium oxide, iron oxide, titanium oxide, zinc oxide, and alumina), powders of metal hydroxides (e.g., aluminum hydroxide, magnesium hydroxide, zirconium hydroxide, and alumina hydrate (boehmite)), powders of metal sulfides (e.g., zinc sulfide, molybdenum sulfide, and tungsten

sulfide), silver nanowires, carbon fibers, glass fibers, carbon nanotubes, graphene, and ceramic materials such as silica.
These (A) to (C) can be mixed in appropriate amounts depending on the intended use, and the total amount of (A) to (C) mixed is preferably 90 wt% or less relative to the total weight of the polyether nitrile resin composition.

(Method for producing polyether nitrile resin composition according to present invention)

A method for producing the polyether nitrile resin composition according to the present invention is a method including mixing the polyether nitrile according to the present invention with at least one selected from the group consisting of a thermoplastic resin material (A), an additive (B), and a filler (C). Here, the shape of the polyether nitrile is preferably a powder or a molding material shape.
In this method including mixing, when the polyether nitrile according to the present invention produced by method 1 is used, two or more raw-material polyether nitriles having different weight-average molecular weights, the two or more raw-material polyether nitrile providing the polyether nitrile according to the present invention when mixed, are mixed with at least one selected from the group consisting of (A) to (C): a thermoplastic resin material (A), an additive (B), and a filler (C).
The step of mixing the components in this case preferably includes first performing a "polyether nitrile mixing step" of mixing two or more raw-material polyether nitriles having different weight-average molecular weights in a manner as previously described to obtain the polyether nitrile according to the present invention, and then performing a "resin composition component mixing step" of mixing the polyether nitrile obtained in the "polyether nitrile mixing step" with at least one selected from the group consisting of (A) to (C): a thermoplastic resin material (A), an additive (B), and a filler (C).
When the polyether nitrile according to the present invention produced by method 2 is used, a powder or molding material of the polyether nitrile is mixed with at least one selected from the group consisting of (A) to (C): a thermoplastic resin material (A), an additive (B), and a filler (C).
From the polyether nitrile resin composition according to the present invention thus obtained, a molding material of the polyether nitrile resin composition can be produced in the same manner as the above-described process of producing a molding material. The melt molding in the process of producing a molding material is preferably performed under exclusion of oxygen or in an inert atmosphere because a polyether nitrile resin composition molding material having high melt flowability can be obtained.
The polyether nitrile obtained by the method of the present invention can be processed into a molding material by the above-described method or subjected to the production of a molded article or a part using the molding material, and has heat resistance, chemical resistance, flame resistance, and high mechanical properties. The polyether nitrile can be used in, for example, electric and electronic applications such as personal computers and semiconductor parts, automotive applications such as gears, bearings, and housings around engines, or applications in the medical equipment and aerospace fields.

## EXAMPLES

The present invention will now be described more specifically with reference to Examples, but it should be noted that the present invention is not limited to these Examples.
Analysis methods in the present invention are as follows.

(1) Semi-crystallization time

Using a power-compensated differential scanning calorimeter (DSC8500, manufactured by PerkinElmer Inc.), pellets of polyether nitriles obtained in Examples and Comparative Examples described later were measured for a semi-crystallization time, which is a time at which half the total heat of crystallization is reached at a measurement temperature, under the following conditions.

<Conditions>

Sample: 5 mg
Measurement atmosphere: nitrogen
Temperature control: heated from 30°C to 370°C at a heating rate of 500°C/min, held for 3 minutes, then cooled to a measurement temperature at a cooling rate of 500°C/min, and held at the measurement temperature.

(2) Measurement of molecular weight

The weight-average molecular weight (Mw) and the number-average molecular weight (Mn) of the obtained polyether nitriles were measured with the following apparatus under the following conditions using a solution obtained by 10-fold diluting a 1% p-chlorophenol solution of each polyether nitrile with chloroform. From these values, the molecular weight distribution Mw/Mn was determined.

Apparatus: gel permeation chromatography: 515 HPLC pump, 717 plus Autosampler, 2487 UV/Vis Detector (manufactured by Nihon Waters K.K.)
Column: 2 × PLgel 5μ MIXED-D, 7.5 × 300 mm (Agilent Technologies)
Column temperature: 40°C
Flow rate: 1.0 mL/min
Injection volume: 2.5 μL
Detection: UV/Vis Detector: 254 nm
Column calibration: monodisperse polystyrene (EasiCal PS-1 Agilent Technologies)
Molecular weight calibration: relative ratio calibration method (relative to polystyrene)
Analysis software: Empower 3 (manufactured by Nihon Waters K.K.)

(3) Method of measuring reduced viscosity $\eta_{red}$ (dL/g) of polymer

A sample in an amount of 0.1 g was dissolved in about 5 g of parachlorophenol at 180°C, and the solution was transferred to a 10 mL measuring flask. The flask was made up to volume at 40°C, and the resultant was weighed out with a 5 mL whole pipette and put into an Ostwald tube (capillary tube 0.75 mm). This was allowed to stand in a constant-temperature bath at 40.0°C for 15 minutes, and a flow time T was measured to make a calculation by the following calculation formula.

[Calculation formula]

$$\text{Reduced viscosity } \eta_{red} = \{(T/T_0) - 1\}/C$$

C: concentration (g/dL) of solution
T: flow time (s) of sample solution
$T_0$: flow time (s) of parachlorophenol

(4) Analysis of thermal properties: melting point (Tm), glass transition temperature (Tg), cooling crystallization temperature (Tc)

Using a differential scanning calorimeter (DSC-60, manufactured by Shimadzu Corporation), thermal properties were measured under the following conditions using the pellets of the polyether nitriles obtained in Examples and Comparative Examples described later. The melting point (Tm) and the glass transition temperature (Tg) were measured during the course of heating, and the cooling crystallization temperature was measured during the course of cooling at a rate of 10°C per minute after holding at 370°C for 1 minute.

<Conditions>

Sample: 10 mg
Nitrogen flow rate: 50 mL/min.
Temperature change range: 50°C to 370°C
Temperature change rate: 10°C/min.

<Synthesis Example 1>

In a four-necked 3-liter reaction vessel equipped with a mechanical stirrer, a thermometer, a dry nitrogen inlet, and a reflux condenser, 298.45 g (1.735 mol) of 2,6-dichlorobenzonitrile (hereinafter referred to as "DCBN"), 323.08 g

(1.735 mol) of 4,4'-biphenol (hereinafter referred to as "BP"), 251.79 g (1.822 mol: 1.05 moles per mole of BP) of anhydrous potassium carbonate, 60 g of toluene, and 1562 g of anhydrous sulfolane were loaded. This mixture was heated from room temperature under a stream of nitrogen, and with stirring at 250 rpm, the temperature was increased to 160°C with heating under reflux. At 130°C or higher, carbon dioxide evolved from the reaction of potassium carbonate and "BP". After 3 hours at 160°C, the oligomerization reaction of "DCBN" and "BP" was completed, and then the cooling water in the reflux condenser was replaced with warm water to remove water and toluene through an outlet, whereby the temperature was raised to 220°C, where a polycondensation reaction was carried out for 1.5 hours.

After the polycondensation reaction, a polycondensation reaction product was taken out from the bottom of the reaction vessel and allowed to cool and solidify. After this solid product was pulverized with a Waring blender, the pulverized product was washed with acetone and distilled water and dried in a vacuum oven at 120°C for 16 hours to obtain 470 g of a raw-material polyether nitrile in powder form (hereinafter referred to as "raw-material resin A") (yield 95%).

This raw-material polyether nitrile obtained by the polycondensation reaction of "DCBN" and "BP" has a repeating unit represented by the following formula.

[Chem. 24]

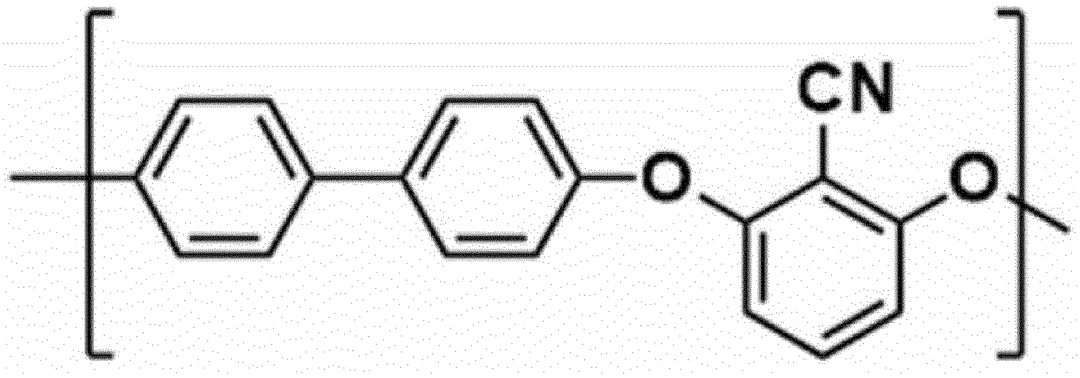

<Synthesis Example 2>

A raw-material polyether nitrile in powder form (hereinafter referred to as "raw-material resin B") was obtained by the same operation as in Synthesis Example 1 except that the polycondensation reaction was carried out at a temperature of 220°C for 8.0 hours.

<Synthesis Example 3>

A raw-material polyether nitrile in powder form (hereinafter referred to as "raw-material resin C") was obtained by the same operation as in Synthesis Example 1 except that the polycondensation reaction was carried out at a temperature of 220°C for 1.0 hour.

<Synthesis Example 4>

A raw-material polyether nitrile in powder form (hereinafter referred to as "raw-material resin D") was obtained by the same operation as in Synthesis Example 1 except that the polycondensation reaction was carried out at a temperature of 220°C for 3.0 hours.

<Synthesis Example 5>

A raw-material polyether nitrile in powder form (hereinafter referred to as "raw-material resin E") was obtained by the same operation as in Synthesis Example 1 except that the reaction was carried out at 220°C for 1 hour with the amount of anhydrous potassium carbonate changed to 237.42 g (1.718 mol: 0.90 moles per mole of BP).

The raw-material polyether nitriles (raw-material resins A to E) obtained in Synthesis Examples 1 to 5 were analyzed for their weight-average molecular weight (Mw), number-average molecular weight (Mn), and reduced viscosity $\eta_{red}$ by the above analysis methods. The results and "Mw/Mn" values are listed in Table 1.

[Table 1]

| | Raw-material polyether nitrile | Mw | Mn | Mw/Mn | $\eta_{red}$ (dl/g) |
|---|---|---|---|---|---|
| Synthesis Example 1 | raw-material resin A | 72800 | 27600 | 2.64 | 1.81 |
| Synthesis Example 2 | raw-material resin B | 72900 | 22200 | 3.28 | 1.55 |
| Synthesis Example 3 | raw-material resin C | 59800 | 25600 | 2.34 | 1.49 |
| Synthesis Example 4 | raw-material resin D | 77300 | 30100 | 2.57 | 2.19 |
| Synthesis Example 5 | raw-material resin E | 9240 | 5660 | 1.63 | 0.24 |

<Examples 1 to 3 and Comparative Examples 1 to 5>

Using the raw-material polyether nitriles (raw-material resins A to E) obtained in Synthesis Examples 1 to 5 above, powder mixing was performed with types of resins and their blending ratios in parts by weight in the columns of Raw-material resin (1) and Raw-material resin (2) in Table 2 below, and melt kneading was performed at 380°C under nitrogen. The resulting products were then formed into pellets.

The weight-average weight (Mw), number-average molecular weight (Mn), thermal properties, and semi-crystallization times at 275°C and 300°C of the obtained polyether nitriles were measured by the above-described methods.

The results are shown in Table 2.

[Table 2]

| | Raw-material resin (1) | | Raw-material resin (2) | | Mw | Mn | Mw/Mn | Semi-crystallization time (s) | | Tm (°C) | Tg (°C) |
|---|---|---|---|---|---|---|---|---|---|---|---|
| | Type | Parts by weight | Type | Parts by weight | | | | 275°C | 300°C | | |
| Comparative Example 1 | raw-material resin A | 90 | raw-material resin E | 10 | 66444 | 17360 | 3.83 | 111 | 135 | 348 | 202 |
| Example 1 | raw-material resin B | 90 | raw-material resin E | 10 | 66534 | 14470 | 4.60 | 68 | 89 | 347 | 201 |
| Example 2 | raw-material resin D | 80 | raw-material resin E | 20 | 63688 | 13566 | 4.69 | 70 | 95 | 350 | 198 |
| Comparative Example 2 | raw-material resin C | 100 | - | 0 | 59800 | 25600 | 2.34 | 108 | 133 | 345 | 204 |
| Example 3 | raw-material resin A | 80 | raw-material resin E | 20 | 60088 | 13034 | 4.61 | 43 | 60 | 349 | 197 |
| Comparative Example 3 | raw-material resin A | 100 | - | 0 | 72800 | 27600 | 2.64 | 191 | 216 | 347 | 206 |
| Comparative Example 4 | raw-material resin B | 100 | - | 0 | 72900 | 22200 | 3.28 | 180 | 204 | 345 | 206 |
| Comparative Example 5 | raw-material resin D | 100 | - | 0 | 77300 | 30100 | 2.57 | 271 | 314 | 345 | 204 |

As shown in Table 2, it has become clear that the polyether nitriles of Examples 1 to 3 according to the present invention have a semi-crystallization time of 100 seconds or less at 275°C, which is shorter than the semi-crystallization times of the polyether nitriles of Comparative Examples 1 to 5 of the related art, and that even comparisons between polyether nitriles having similar weight-average molecular weights (Comparative Example 1 and Examples 1 and 2, Comparative Example 2 and Example 3) show significant reduction in semi-crystallization time and significant improvement in crystallization speed.

It has also become clear that the polyether nitriles according to the present invention also keep a high melting point (Tm) and a high glass transition temperature (Tg).

Therefore, the polyether nitrile according to the present invention has a high crystallization speed and can provide a polyether nitrile molded article having high heat resistance in a short molding cycle, and thus is very useful.

Furthermore, it has also become clear that the polyether nitriles of Examples 1 to 3 according to the present invention have a weight-average molecular weight as high as 50,000 or more and have sufficiently excellent mechanical properties.

<Relationship between semi-crystallization time (τc1/2: s) and weight-average molecular weight (Mw), molecular weight distribution (Mw/Mn), and temperature (T: °C)>

For the polyether nitriles obtained in Examples 1 to 3 and Comparative Examples 1 and 3 to 5, using the measured weight-average molecular weight (Mw) and molecular weight distribution (Mw/Mn), the temperature (T) at the time of semi-crystallization time measurement, and the measured semi-crystallization time (τc1/2) at the temperature, the relationship between the semi-crystallization time (τc1/2) and the weight-average molecular weight (Mw), the molecular weight distribution (Mw/Mn), and the temperature (T) was analyzed by multiple regression analysis using Microsoft Excel, as a result of which analysis results were obtained with high accuracy with an adjusted $R^2$ of 0.94, and the relation of mathematical formula (I) was found to hold. The measured values used in the multiple regression analysis are shown in Table 3, and the multiple regression analysis results are shown in Table 4.

$$\tau c1/2 = 0.00873 \times Mw - 36.4 \times Mw/Mn + 1.02 \times T - 609.8$$ Mathematical formula (I):

[Table 3]

| NO. | Mw | Mw/Mn | Temperature T (°C) | Semi-crystallization time τc1/2 (s) |
|---|---|---|---|---|
| | X1 | X2 | X3 | Y |
| 1 | 77300 | 2.57 | 300 | 314 |
| 2 | 63688 | 4.69 | 300 | 95 |
| 3 | 72800 | 2.64 | 300 | 216 |
| 4 | 66444 | 3.83 | 300 | 135 |
| 5 | 60088 | 4.61 | 300 | 60 |
| 6 | 72900 | 3.28 | 300 | 204 |
| 7 | 66534 | 4.60 | 300 | 89 |
| 8 | 77300 | 2.57 | 275 | 271 |
| 9 | 63688 | 4.69 | 275 | 70 |
| 10 | 72800 | 2.64 | 275 | 191 |
| 11 | 66444 | 3.83 | 275 | 111 |
| 12 | 60088 | 4.61 | 275 | 43 |
| 13 | 72900 | 3.28 | 275 | 180 |
| 14 | 66534 | 4.60 | 275 | 68 |

[Table 4]

| Regression statistics | |
|---|---|
| Multiple correlation R | 0.978397901 |
| Multiple determination R2 | 0.957262454 |
| Adjusted R2 | 0.94444119 |
| Standard error | 19.86705469 |
| Number of observations | 14 |

| ANOVA table | | | | | |
|---|---|---|---|---|---|
| | Degrees of freedom | Variation | Variance | Observed variance ratio | Significant F |
| Regression | 3 | 88407.359 | 29469.1195 | 74.66209727 | 3.79E-07 |
| Residual | 10 | 3946.9986 | 394.699862 | | |
| Total | 13 | 92354.357 | | | |

| | Coefficient | Standard error | t | P-value |
|---|---|---|---|---|
| Intercept | -609.835147 | 249.23109 | -2.44686628 | 0.034441974 |
| X value 1 | 0.008731319 | 0.0023805 | 3.6678335 | 0.004332605 |
| X value 2 | -36.4322403 | 15.390457 | -2.3671968 | 0.039465601 |
| X value 3 | 1.022857143 | 0.4247755 | 2.40799469 | 0.036809311 |
| | Lower limit 95% | Upper limit 95% | Lower limit 95.0% | Upper limit 95.0% |
| Intercept | -1165.16 | -54.5137 | -1165.16 | -54.5137 |
| X value 1 | 0.003427 | 0.014035 | 0.003427 | 0.014035 |
| X value 2 | -70.7243 | -2.14017 | -70.7243 | -2.14017 |
| X value 3 | 0.076398 | 1.969316 | 0.076398 | 1.969316 |

From mathematical formula (I), it has become clear that the relationship between the molecular weight distribution (Mw/Mn) and the weight-average molecular weight (Mw) of a polyether nitrile whose semi-crystallization time at a temperature of 275°C is 100 seconds or less can be expressed by mathematical formula (i) below.

$$\text{Mathematical formula (i): } Mw/Mn \geq 2.4 \times 10^{-4} \times Mw - 11.8$$

That is, it has become clear that polyether nitriles having a molecular weight distribution (Mw/Mn) and a weight-average molecular weight (Mw) falling within the region above the straight line of Mw/Mn = $2.4 \times 10^{-4} \times$ Mw - 11.8 in the relationship between the molecular weight distribution (Mw/Mn) and the weight-average molecular weight (Mw) give a semi-crystallization time of 100 seconds or less at a temperature of 275°C.

A graph showing the relationship between the molecular weight distribution (Mw/Mn) and the weight-average molecular weight (Mw), where Mw is in the range of 50,000 or more to 80,000 or less, and Mw/Mn is in the range of 0 or more to 10 or less, is shown in Fig. 1. When the molecular weight distribution (Mw/Mn) and the weight-average molecular weight (Mw) of a polyether nitrile fall within the region indicated by a shaded area above the straight line: "Mw/Mn = 2.4 × 10-4 × Mw - 11.8", the semi-crystallization time is 100 seconds or less at a temperature of 275°C.

Furthermore, from mathematical formula (I), it has become clear that the relationship between the molecular weight distribution (Mw/Mn) and the weight-average molecular weight (Mw) of a polyether nitrile whose semi-crystallization time at a temperature of 275°C is 85 seconds or less can be expressed by mathematical formula (ii), and the relationship between the molecular weight distribution (Mw/Mn) and the weight-average molecular weight (Mw) of a polyether nitrile whose semi-crystallization time at a temperature of 275°C is 50 seconds or less can be expressed by mathematical formula (iii).

$$Mw/Mn \geq 2.4 \times 10^{-4} \times M_w - 11.4$$ Mathematical formula (ii):

$$Mw/Mn \geq 2.4 \times 10^{-4} \times Mw - 10.4$$ Mathematical formula (iii):

For the polyether nitriles of Examples 1 to 3 and Comparative Examples 1 to 5, the semi-crystallization time at 275°C, Mw/Mn, calculated values of the right sides of mathematical formulas (i) to (iii), and whether mathematical formulas (i) to (iii) are satisfied are listed in Table 5.

In the columns of "Mathematical formula (i) satisfied", "Mathematical formula (ii) satisfied", and "Mathematical formula (iii) satisfied" in Table 5, "◦" means that the formula is satisfied, and "×" means that the formula is not satisfied.

[Table 5]

| | Semi-crystallization time (s) at 275°C | Mw/Mn | Calculated value of right side of mathematical formula (i) | Calculated value of right side of mathematical formula (ii) | Calculated value of right side of mathematical formula (iii) | Mathematical formula (i) satisfied | Mathematical formula (ii) satisfied | Mathematical formula (iii) satisfied |
|---|---|---|---|---|---|---|---|---|
| Comparative Example 1 | 111 | 3.83 | 4.15 | 4.55 | 5.55 | × | × | × |
| Example 1 | 68 | 4.60 | 4.17 | 4.57 | 5.57 | ○ | ○ | × |
| Example 2 | 70 | 4.69 | 3.49 | 3.89 | 4.89 | ○ | ○ | × |
| Comparative Example 2 | 108 | 2.34 | 2.55 | 2.95 | 3.95 | × | × | × |
| Example 3 | 43 | 4.61 | 2.62 | 3.02 | 4.02 | ○ | ○ | ○ |
| Comparative Example 3 | 191 | 2.64 | 5.67 | 6.07 | 7.07 | × | × | × |
| Comparative Example 4 | 180 | 3.28 | 5.70 | 6.10 | 7.10 | × | × | × |
| Comparative Example 5 | 271 | 2.57 | 6.75 | 7.15 | 8.15 | × | × | × |

It has become clear that among the polyether nitriles according to the present invention having a semi-crystallization time of 100 seconds or less at 275°C, the polyether nitriles of Examples 1 and 2 satisfy the relations of mathematical formulas (i) and (ii), and the polyether nitrile of Example 3 satisfies the relations of mathematical formulas (i) to (iii), and that the polyether nitriles of Comparative Examples 1 to 5 having a semi-crystallization time of longer than 100 seconds at 275°C do not satisfy any of the relations of mathematical formulas (i) to (iii).

Since the foregoing Examples are based on biphenol-polyether nitriles having a low crystallization speed among polyether nitriles, it will be appreciated by persons who have common knowledge in the field of polyether nitriles that all polyether nitriles such as resorcinol-polyether nitriles and hydroquinone-polyether nitriles having a higher crystallization speed are within the scope of the present invention and are polyether nitriles having a very short semi-crystallization time and a very high crystallization speed. Application of the technique of the present invention to other polyether resins less likely to crystallize is easily conceivable by those skilled in the art, and is obvious from the present invention.

## Claims

1. A polyether nitrile having a semi-crystallization time of 100 seconds or less at 275°C, the semi-crystallization time being determined by power-compensated differential scanning calorimetry when the polyether nitrile is cooled from a molten state at 370°C to 275°C at a cooling rate of 500°C per minute.

2. The polyether nitrile according to Claim 1, wherein a weight-average molecular weight (Mw) in terms of polystyrene determined by gel permeation chromatography analysis is 50,000 or more.

3. The polyether nitrile according to Claim 2, wherein the weight-average molecular weight (Mw) and a number-average molecular weight (Mn) in terms of polystyrene determined by gel permeation chromatography analysis satisfy mathematical formula (i).

$$\text{Mathematical formula (i): } Mw/Mn \geq 2.4 \times 10^{-4} \times Mw - 11.8$$

4. The polyether nitrile according to any one of Claims 1 to 3, wherein the polyether nitrile has a repeating unit represented by general formula (3).

[Chem. 1]

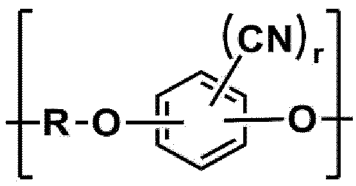

(3)

(In the formula, R represents a divalent group represented by general formula (1a) or general formula (1b), and r represents an integer of 1 to 4.)

[Chem. 2]

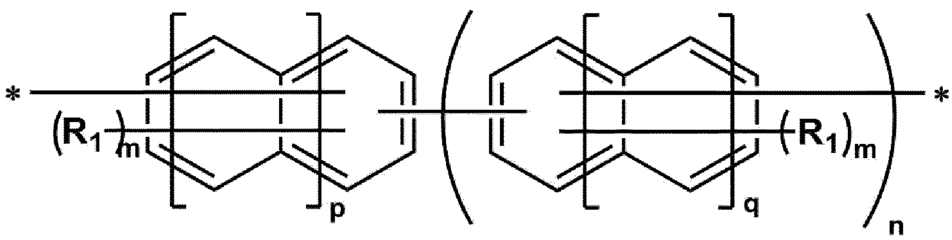

(1a)

(In the formula, each $R_1$ independently represents a linear or branched alkyl group having 1 to 6 carbon atoms, a cyclic

alkyl group having 5 or 6 carbon atoms, or a phenyl group, each m independently represents an integer of 0 to 4, n represents 0 or 1, p and q represent 0, 1, or 2, and each * represents a bonding position.)

[Chem. 3]

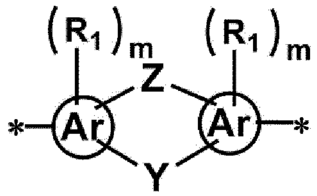

(1b)

(In the formula, $R_1$ and m are as defined in general formula (1a), Y represents an oxygen atom, a sulfur atom, a sulfonyl group, a carbonyl group, an alkylidene group having 1 to 15 carbon atoms, a fluorine-containing alkylidene group having 2 to 15 carbon atoms, a cycloalkylidene group having 5 to 15 carbon atoms, a phenylmethylidene group, a phenylethylidene group, a phenylene group, or a fluorenylidene group, Z represents an oxygen atom, a sulfur atom, or non-bridging, each Ar independently represents an aryl group having 6 to 8 carbon atoms, and each * represents a bonding position.)

**5.** The polyether nitrile according to Claim 4, wherein R in general formula (3) above is represented by general formula (1a') or general formula (1a").

[Chem. 4]

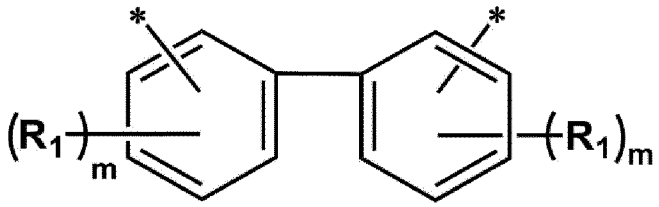

(1a')

(In the formula, $R_1$, m, and * are as defined in general formula (1a) above.)

[Chem. 5]

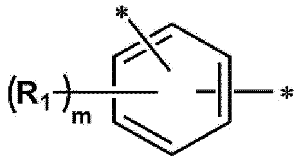

(1a")

(In the formula, $R_1$, m, and * are as defined in general formula (1a) above.)

**6.** The polyether nitrile according to Claim 5, wherein the repeating unit represented by general formula (3) above is a repeating unit represented by general formula (3').

[Chem. 6]

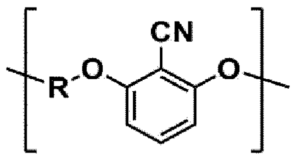

(3')

(In the formula, R is as defined in general formula (3) above.)

**7.** The polyether nitrile according to Claim 6, wherein R in the repeating unit represented by general formula (3') above is at least one group selected from divalent groups represented by structures below.

[Chem. 7]

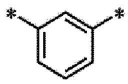 , 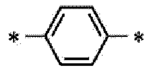 , 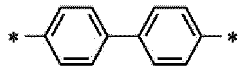

**8.** A polyether nitrile resin composition comprising the polyether nitrile according to Claim 1 and at least one selected from the group consisting of (A) to (C): a thermoplastic resin material (A), an additive (B), and a filler (C).

**9.** A method for producing the polyether nitrile according to Claim 1, comprising mixing two or more raw-material polyether nitriles having different weight-average molecular weights.

**10.** The method for producing the polyether nitrile according to Claim 9, wherein the polyether nitrile has a repeating unit represented by general formula (3).

[Chem. 8]

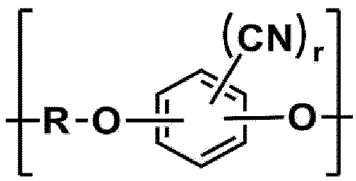 (3)

(In the formula, R represents a divalent group represented by general formula (1a) or general formula (1b), and r represents an integer of 1 to 4.)

[Chem. 9]

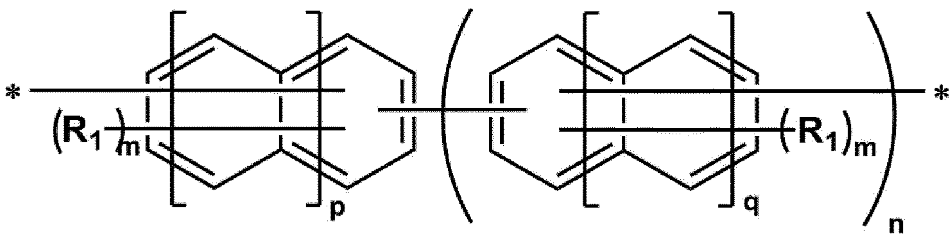 (1a)

(In the formula, each $R_1$ independently represents a linear or branched alkyl group having 1 to 6 carbon atoms, a cyclic alkyl group having 5 or 6 carbon atoms, or a phenyl group, each m independently represents an integer of 0 to 4, n represents 0 or 1, p and q represent 0, 1, or 2, and each * represents a bonding position.)

[Chem. 10]

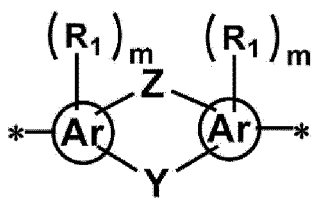 (1b)

(In the formula, $R_1$ and m are as defined in general formula (1a), Y represents an oxygen atom, a sulfur atom, a sulfonyl group, a carbonyl group, an alkylidene group having 1 to 15 carbon atoms, a fluorine-containing alkylidene group having 2 to 15 carbon atoms, a cycloalkylidene group having 5 to 15 carbon atoms, a phenylmethylidene group, a phenylethylidene group, a phenylene group, or a fluorenylidene group, Z represents an oxygen atom, a sulfur atom, or non-bridging, each Ar independently represents an aryl group having 6 to 8 carbon atoms, and each * represents a bonding position.)

**11.** The method for producing the polyether nitrile according to Claim 10, wherein each of the two or more raw-material polyether nitriles having different weight-average molecular weights is a raw-material polyether nitrile having an identical repeating unit among repeating units represented by general formula (3) above.

**12.** A method for producing a polyether nitrile resin composition, comprising mixing two or more raw-material polyether nitriles having different weight-average molecular weights with at least one selected from the group consisting of (A) to (C): a thermoplastic resin material (A), an additive (B), and a filler (C), wherein when the two or more raw-material polyether nitriles are mixed, a polyether nitrile having a semi-crystallization time of 100 seconds or less at 275°C, the semi-crystallization time being determined by power-compensated differential scanning calorimetry when the polyether nitrile is cooled from a molten state at 370°C to 275°C at a cooling rate of 500°C per minute, is provided.

**13.** The method for producing a polyether nitrile resin composition according to Claim 12, comprising:

a polyether nitrile mixing step of mixing the two or more raw-material polyether nitriles having different weight-average molecular weights to obtain a polyether nitrile having a semi-crystallization time of 100 seconds or less at 275°C, the semi-crystallization time being determined by power-compensated differential scanning calorimetry when the polyether nitrile is cooled from a molten state at 370°C to 275°C at a cooling rate of 500°C per minute; and then
a resin composition component mixing step of mixing the polyether nitrile obtained in the polyether nitrile mixing step with at least one selected from the group consisting of (A) to (C): the thermoplastic resin material (A), the additive (B), and the filler (C).

FIG. 1

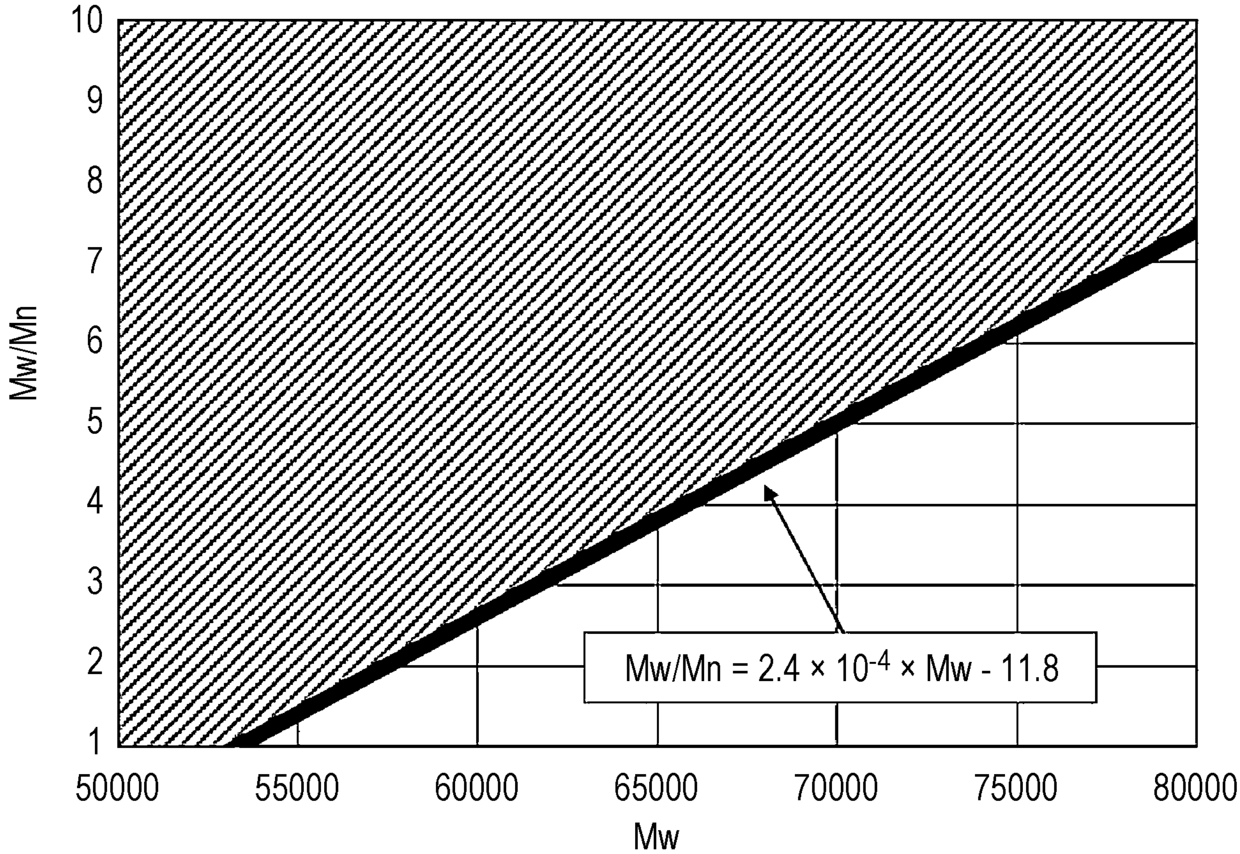
10
9
8
7
6
5
4
3
2
1
Mw/Mn
50000
55000
60000
65000
70000
75000
80000
Mw
Mw/Mn = 2.4 × 10-4 × Mw - 11.8

## INTERNATIONAL SEARCH REPORT

International application No.
**PCT/JP2023/028547**

**A. CLASSIFICATION OF SUBJECT MATTER**

***C08G 65/40***(2006.01)i
FI: C08G65/40

According to International Patent Classification (IPC) or to both national classification and IPC

**B. FIELDS SEARCHED**

Minimum documentation searched (classification system followed by classification symbols)

C08G65/40

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2022-71959 A (TORAY INDUSTRIES) 17 May 2022 (2022-05-17)<br>claims 1, 4, paragraphs [0002], [0031]-[0032], [0065]-[0067], examples 1-2 | 1-13<br>1-13 |
| X<br>Y | JP 2022-115276 A (TORAY INDUSTRIES) 09 August 2022 (2022-08-09)<br>claims 1, 3, 6, paragraphs [0004], [0026]-[0027], [0049], examples 1-2 | 1-13<br>1-13 |
| Y | CN 111303609 A (UNIVERSITY OF ELECTRONIC SCIENCE AND TECHNOLOGY OF CHINA) 19 June 2020 (2020-06-19)<br>claim 1, paragraphs [0024]-[0025] | 1-13 |
| A | WO 2012/005346 A1 (JSR CORPORATION) 12 January 2012 (2012-01-12) | 1-13 |
| A | JP 1-193354 A (IDEMITSU KOSAN CO LTD) 03 August 1989 (1989-08-03) | 1-13 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 October 2023** | **17 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br><br>Telephone No. |

Form PCT/ISA/210 (second sheet) (January 2015)

INTERNATIONAL SEARCH REPORT

International application No.
PCT/JP2023/028547

C. DOCUMENTS CONSIDERED TO BE RELEVANT

| Category* | Citation of document, with indication, where appropriate, of the relevant passages | Relevant to claim No. |
|---|---|---|
| A | JP 3-181518 A (IDEMITSU KOSAN CO LTD) 07 August 1991 (1991-08-07) | 1-13 |

Form PCT/ISA/210 (second sheet) (January 2015)

**INTERNATIONAL SEARCH REPORT**
**Information on patent family members**

International application No.
**PCT/JP2023/028547**

| Patent document cited in search report | Publication date (day/month/year) | Patent family member(s) | Publication date (day/month/year) |
|---|---|---|---|
| JP 2022-71959 A | 17 May 2022 | (Family: none) | |
| JP 2022-115276 A | 09 August 2022 | (Family: none) | |
| CN 111303609 A | 19 June 2020 | (Family: none) | |
| WO 2012/005346 A1 | 12 January 2012 | TW 201204765 A | |
| JP 1-193354 A | 03 August 1989 | US 4972016 A<br>EP 326871 A2 | |
| JP 3-181518 A | 07 August 1991 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 59206433 A
- JP 60147439 A
- JP 61055120 A
- JP 62223226 A
- JP 62240353 A
- JP 1193354 A
- JP 2021241492 A